# EUROPÄISCHE PATENTANMELDUNG

(11) **EP 0 978 480 A2**
(43) Veröffentlichungstag der Anmeldung: **09.02.2000**
(21) Anmeldenummer: 99114981.6
(22) Anmeldetag: 31.07.1999
(51) Int. Cl.: C02F 3/10

(54) **Einsatz für eine Klärkammer einer Kläranlage**

(30) Priorität: 05.08.1998 DE 19835363
(71) Anmelder: Ammermann GmbH, 26639 Wiesmoor (DE)
(72) Erfinder: Lüppe, Ammermann, 26639 Wiesmoor (DE)
(74) Vertreter: Lauerwald, Jörg, Dipl.-Phys.

(57) **Zusammenfassung**

Die Erfindung betrifft einen Einsatz für eine Klärkammer einer Kläranlage, vorzugsweise einer Klein- oder Hauskläranlage, umfassend einen Aufwuchskörper für den Aufwuchs eines Bakterienmaterials zum aeroben Abbau von Schmutzstoffen, der als Tauchkörper zum Eintauchen unterhalb eines Wasserspiegels in die Klärkammer vorgesehen ist und Trägermaterial zur Ansiedlung des Bakterienmaterials umfaßt, wobei das Trägermaterial selbst eine relativ offene, im wesentlichen allseitig durchströmbare Struktur aufweist, und umfassend eine Belüftungseinrichtung mit wenigstens einem unter dem Tauchkörper anordbaren Lüfter, vorzugsweise Tellerlüfter.

Der Erfindung liegt die Aufgabe zugrunde, die aerobe Klärung in einer Klärkammer effektiver zu gestalten.

Diese Aufgabe wird erfindungsgemäß dadurch gelöst, daß der Aufwuchskörper aus Körperbereichen oder Körpermodulen zusammengestellt ist, die jeweils Trägermaterial enthalten, das für eine nur zweiseitige Durchströmung mit weitgehend lotrechter Strömungsrichtung zu einer röhrenartigen Form beliebigen Querschnittes ummantelt ist, derart, daß der Aufwuchskörper, aus einem Bündel von solchen Körperbereichen oder Körpermodulen bestehend, selbst nur zweiseitig durchströmbar ist

## Beschreibung

Die Erfindung betrifft einen Einsatz für eine Klärkammer einer Kläranlage, vorzugsweise einer Klein- oder Hauskläranlage, umfassend einen Aufwuchskörper für den Aufwuchs eines Bakterienmaterials zum aeroben Abbau von Schmutzstoffen, der als Tauchkörper zum Eintauchen unterhalb eines Wasserspiegels in die Klärkammer vorgesehen ist und Trägermaterial zur Ansiedlung des Bakterienmaterials umfaßt, wobei das Trägermaterial selbst eine relativ offene, im wesentlichen allseitig durchströmbare Struktur aufweist, und umfassend eine Belüftungseinrichtung mit wenigstens einem unter dem Tauchkörper anordbaren Lüfter, vorzugsweise Tellerlüfter.

Aus der DE-PS 38 37 852 ist eine Kleinkläranlage mit einer Mehrkammergrube entnehmbar. Diese weist eine Klärkammer auf, die als Zwischenkammer zwischen einer Einlaufkammer und einer Ablaufkammer ausgebildet ist. In dieser Klärkammer ist ein Festbett mit einer Belüftungseinrichtung angeordnet. Bei einem solchen Festbett handelt es sich um einen allseitig durchströmbaren Aufwuchskörper für den Aufwuchs eines Bakterienmaterials zum aeroben Abbau von Schmutzstoffen.

Ein Einsatz gemäß der eingangs genannten Gattung ist zudem aus dem DE-GM 94 09 528 bekannt. Der bekannte Einsatz umfaßt einen Aufwuchskörper, der als Tauchkörper ausgebildet ist und zur Absenkung in eine Klärkammer an einem Stativträger angeordnet ist. Der Tauchkörper ist allseitig durchströmbar.

Der eingangs genannte Einsatz ist in Verbindung mit dem aeroben Abbau von Schmutzstoffen in Kläranlagen vorgesehen. Hierbei soll es sich vorzugsweise um Klein- oder Hauskläranlagen handeln. Üblich waren früher, insbesondere bei einzelnen Häusern oder Gehöften, die nicht an ein Abwasserkanalsystem angeschlossen waren, sogenannte Mehrkammergruben, die nach dem Überlauf- und Auslaufprinzip arbeiteten. Ein solches einfaches Prinzip gewährleistet aber nicht den Klärungsgrad des Abwassers, der heutigentags erwünscht ist. Der zitierten DE-PS 38 37 852 lag daher die Idee zugrunde, derartige überlauf-Mehrkammergruben, die herkömmerlicherweise anaerob arbeiten, durch einen aeroben Abbau aktiver zu betreiben. Dafür wurde die Zwischenkammer eines Dreikammersystems mit einem entsprechenden Festbett und einer Belüftungseinrichtung nachgerüstet. In dem Festbett sind aerob arbeitende Bakterien angesiedelt, mit der Belüftungseinrichtung wird die dafür notwendige Luft in das System eingebracht. Die Belüftungseinrichtung umfaßt normalerweise bodennah angeordnete Lüfter, aus denen die Luft aufwärts durch den darüber befindlichen Tauchkörper sprudelt und auf diese Weise die dort angesiedelten Bakterien mit Luft versorgt.

Als Trägermaterial für die Bakterien wird in der Regel ein gitterartiges, netzartiges oder gegebenenfalls auch geknäueltes, fädiges Material, zumeist aus Kunststoff, verwendet, das bezogen auf das Volumen eine besonders große Oberfläche für die Bakterien, und damit auch für den aktiven Abbau, zur Verfügung stellt.

Dabei folgt dieses bekannte System der vermeintlichen Logik, daß die bereitgestellte, möglichst große Arbeitsfläche des Tauchkörpers möglichst auch allseitig und dadurch lückenlos für das zu klärende Wasser und die aufsprudelnde Luft erreichbar sein müsse, so daß in diesem Sinne Festbetten als allseitig durchströmbare Aufwuchskörper vorgesehen sind.

Dieser geschilderte Hintergrund betrifft das zitierte DE-GM 94 09 528 im Prinzip ebenso.

Der Erfindung liegt die Aufgabe zugrunde, die aerobe Klärung in einer Klärkammer effektiver zu gestalten, wobei es sich bei der Klärkammer nicht unbedingt um eine Zwischenkammer eines Dreikammersystems handelt, sondern in vielen Fällen günstiger um eine nachgeschaltete Klärkammer für eine Nachklärung im Rahmen einer Kläranlage.
Diese Aufgabe wird erfindungsgemäß dadurch gelöst, daß der Aufwuchskörper Körperbereiche oder Körpermodule aufweist, die jeweils Trägermaterial enthalten, das für eine nur zweiseitige Durchströmung mit weitgehend lotrechter Strömungsrichtung zu einer röhrenartigen Form beliebigen Querschnittes ummantelt ist, vorzugsweise derart, daß der Aufwuchskörper, aus einem Bündel von solchen Körperbereichen oder Körpermodulen bestehend, selbst nur zweiseitig durchströmbar ist

Bei dem so gestalteten erfindungsgemäßen Einsatz zeigt sich überraschend, daß durchaus nicht ein allseitig durchströmbares Festbett die effektivste Klärung mittels aeroben Abbaus von Schmutzstoffen erzielt, sondern daß eine gerichtete Strömung, wie beim erfindungsgemäßen Einsatz vorgesehen, sehr viel effektiver ist. Die dem Bakterienmaterial zur Verfügung gestellte Oberfläche ist letztendlich genauso groß und in der Struktur ähnlich wie bei einem allseitig durchströmbaren Festbett. Es kann letztendlich auch dasselbe an sich bekannte Material Verwendung finden. Dies begünstigt insbesondere eine Serienfertigung auch des erfindungsgemäßen Einsatzes.

Aufgrund der zwangsweise gerichteten Strömung durch die Körpermodule und den Aufwuchskörper insgesamt, kommt es jedoch vorteilhaft zu regelbaren, optimalen Strömungsgeschwindigkeiten und damit zu einer optimalen Sauerstoffversorgung in der Anlage. Durch die Strömungsgeschwindigkeit kann bewirkt werden, daß es zu keiner Schlammablagerung kommt, und der Zwangsdurchlauf sorgt für eine optimale Luftverteilung, weil die aufsteigende Luft ebenfalls in den Körperbereichen bzw. Körpermodulen kanalisiert wird und dabei aufgrund der relativ offenen Struktur des Trägermaterials dennoch restlos und lückenlos das vorhandene Bakterienmateral erreichen kann. Gleichzeitig führt die vorgebbare Strömungsgeschwindigkeit, die beispielsweise in an sich bekannter Weise datentechnisch und steuerungstechnisch überwacht und geregelt werden kann, zu einem optimalen Aufwuchs innerhalb des Aufwuchskörpers, weil Verstopfungen durch Bakterienmaterial in der Körperstruktur auf diese Weise vermieden werden. Durch die einstellbare Strömungsgeschwindigkeit wird die Bewuchsstärke auf einem ausreichenden, gleichzeitig aber erträglichen Maß gehalten, weil durch die vorhandene Strömung überschüssiges Material abgerissen und abtransportiert wird.

Die verwendeten Querschnitte der Körperbereiche bzw. Körpermodule sind prinzipiell beliebig, und zwar in Größe und Form. Es ist durchaus sachdienlich, Körperbereiche bzw. Körpermodule mit unterschiedlichen Querschnittsflächengrößen zur Verfügung zu stellen. Je nach Formgebung der Klärkammer können die Querschnitte der Körperbereiche bzw. Körpermodule an die Form der Kammer optimal angepaßt werden und es können auch bei dichten Packungen entstehende Lücken mit bizarreren Quer- schnittsformen gefüllt werden. Auf diese Weise ist es möglich, auch Klärkammern mit unsymmetrischeren oder bizarreren Querschnittsflächen optimal und letztlich restlos über den gesamten Querschnitt zu füllen. Es können nämlich durchaus Teilbereiche an sich runder Kammern als Klärkammer Verwendung finden, beispielsweise halbkreisförmige Teilkammern oder vierteilkreisförmige Teilkammern. Bei Kleinklärlagen bzw. Hauskläranlagen ist es nämlich für die optimale Klärung in erster Linie notwendig, die richtigen Volumenverhältnisse der Kammern eines Mehrkammersystems einzustellen, was oftmals auch durch Teilung vorhandener Kammern erreicht werden kann.

Eine nächste Weiterbildung der Erfindung sieht vor, daß die Ummantelung des Trägermaterials eines Körpersmoduls aus einer flüssigkeitsundurchlässigen Folie besteht. Es können beispielsweise Kunststoffolien verwendet werden, wie sie auch für Säcke oder Planen, z.B. im Gartenbereich, Verwendung finden. Diese Folien sind kostengünstig und einfach zu verarbeiten. Insbesondere können durch diese flexiblen Folienummantelungen die Körpermodule auf beliebige Querschnittsformen gebracht werden.

Insgesamt könnten die verwendeten Folien, das verwendete Trägermaterial und auch zum Teil sonstige Bauelemente des Einsatzes im wesentlichen aus Polyäthylen gefertigt sein.

Das Trägermaterial wird häufig seinerseits rohrförmig zur Verfügung gestellt. Es handelt sich dabei um Gitternetzrohre, also um Rohrformen, deren Mäntel mit einem sehr hohen Lochanteil durchlöchert sind und die gegebenenfalls ergänzende Ansiedlungsflächen auf radial ausgerichteten Verstrebungen dieser Gitternetzrohre für das Bakterienmaterial anbieten. Ein solches rohrförmiges Material kann in einfacher Weise seinerseits zu einem Körperbereich bzw. Körpermodul für einen Aufwuchskörper ummantelt werden, indem beispielsweise eine dieser Rohrformen oder mehrere dieser Rohrformen gebündelt in eine entsprechenden Folienbahn eingeschlagen werden, wobei beispielsweise Randbereiche der Folie verklebt oder verschweißt werden könnten. Derartige Körpermodule, die selbst somit gebündelte Röhrenformen enthalten können, würden im Rahmen einer Überstruktur ihrerseits wiederum zu dem eigentlichen Aufwuchskörper gebündelt.

Bei der Ausbildung einer Überstruktur unter Verwendung von Körpermodulen können durchaus Lücken entstehen oder sogar bewußt und gewollt Lücken in größeren Bereichen, um den Körpermodulen verbleiben. Diese können durch unummanteltes Trägermaterial, z.B. durch Gitternetzrohre gefüllt werden. Diese Gitternetzrohre sind dann automatisch durch die Mäntel der benachbarten Körpermodule und/oder die Wände der Klärkammer selbst ebenfalls wieder mittelbar begrenzt. In der Draufsicht auf einen solchen erfindungsgemäßen Aufwuchskörper entsteht also der Bildeindruck eines Röhrenbündels mit Querschnitten unterschiedlicher Größe und Form der Röhren innerhalb des Röhrenbündels.

Eine andere Weiterbildung der Erfindung sieht vor, daß der Aufwuchskörper an einem lotrechten Befestigungsrohr eines Stativträgers angeordnet ist, das von einem Grundgestell des Stativträgers aufragt, an dem der wenigstens eine Lüfter der Belüftungseinrichtung angeordnet ist, der durch das luftleitende Befestigungsrohr mit Luft versorgt wird. Damit entsteht eine Raumform, wie sie prinzipiell aus dem bereits zitierten DE-GM 94 09 528.0 bekannt ist, aber auch mit dem erfindungsgemäßen Aufwuchskörper Verwendung finden kann, wobei gerade eine solche Ausbildung zusammen mit dem erfindungsgemäßen Aufwuchskörper vorteilhaft ausgestaltet werden kann.

Nach einer Weiterbildung der Erfindung ist nämlich vorgesehen, daß oberhalb des bzw. eines Lüfters ein Körpermodul relativ größeren Querschnittes für die aufsteigende Strömung vorgesehen ist, wobei um das zentrale Körpermodul vorzugsweise Körpermodule kleineren Querschnittes oder unummanteltes Trägermaterial für die absteigende Strömung gruppiert werden bzw. wird.

Bei dem erfindungsgemäßen System soll ja letztendlich nicht nur eine gerichtete aufsteigende Strömung durch die aufsteigende Luft entstehen, sondern es soll ein das Volumen der Klärkammer restlos erfassender Zwangsumlauf entstehen. Einzelne Körpermodule sind somit vorrangig für die aufsteigende Strömung vorgesehen, während andere Körpermodule oder unummantelte Trägermaterialbereiche für die absteigende Strömung vorrangig vorgesehen sind. Dabei wird insbesondere ein oberhalb eines Lüfters befindliches Körpermodul für die aufsteigende Strömung vorgesehen, das bezüglich dieses Lüfters als zentrales Körpermodul angesprochen werden kann. Dieses Körpermodul erhält vorzugsweise einen größeren Querschnitt, der beispielsweise so groß ist wie der verwendete Tellerlüfter oder sogar etwas größer. Es zeigt sich nämlich, daß die von einem Tellerlüfter aufsteigende Luft zunächst einmal auf der gesamten Fläche des Lüfters aufsteigt, daß sich der Luftstrom dann aber in einer gewissen Höhe einschnürt auf eine geringere Querschnittsfläche und sich danach wieder aufweitet, und zwar unter Umständen zu einer größeren Querschnittsfläche als die zunächst vom Tellerlüfter selbst erfaßte Fläche. Durch einstellbare Beabstandung des Aufwuchskörpers am Befestigungsrohr des Statives oberhalb der Lüfter oder durch Bemessung des Durchmessers eines zentralen Körpermoduls ist es also möglich, mit der Querschnittsfläche des zentralen Körpermoduls einen optimalen Lufteintritt in das Körpermodul zu erzielen. Natürlich wäre es möglich, statt eines einzelnen Körpermoduls bereits ein Bündel von Modulen kleineren Querschnittes insgesamt für die aufsteigende Strömung vorzusehen. Es erscheint aber vorteilhaft, jedenfalls innerhalb dieses zentralen Körpermodules eine Art Teilbereich eines allseitig durchströmten, seinerseits nicht unterteilten Bereiches bereitzustellen. Dieser zentrale Bereich könnte beispielsweise im wesentlichen eine Kreisfläche als Querschnitt haben. Um dieses zentrale Körpermodul werden, wie gesagt, Körpermodule kleineren Durchmessers oder wird unummanteltes Trägermaterial gruppiert, und zwar bezüglich der Größenverhältnisse vorzugsweise etwa so, daß der von dem zentralen Körpermodul abgedeckte zentrale Kreisbereich etwa die gleiche Fläche aufweist, wie der radial weiter auswärts liegende Kreisring, den die äußeren Körpermodule oder das unummantelte Trägermaterial um das zentrale Körpermodul herum abdecken. Die Gesamtfläche für die aufsteigende Strömung, sollte, jedenfalls bezogen auf die Fläche der gesamten Klärkammer, etwa genauso groß sein, wie die Fläche für die absteigende Strömung.

In der Draufsicht könnte sich also oberhalb jeden Lüfters eine Art stilisierte Blütenform befinden mit einem relativ großen Zentrum und darum herum angeordneten kleineren Modulflächen oder unummantelten Trägermaterialeinheiten.

Vorzugsweise werden zur Lufterfassung der gesamten Fläche der Klärkammer mehrere Lüfter verwendet, so daß sich oberhalb eines jeden Lüfters eine entsprechende 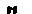 Blüte" befinden könnte. Dabei ist es durchaus möglich, daß sich diese 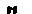 Blüten" im Bereich ihrer äußeren Körpermodule, die für die absteigende Strömung vorgesehen sind, überlappen, also diese äußeren Körpermodule bzw. Kreisringe zu beiden benachbarten 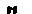 Blüten" gehören.

Eine kreisförmige Klärkammer kann auf diese Weise lückenlos und optimal erfaßt werden. Werden von der Klärkammer nur Teilkreise, also beispielsweise Halbkreise oder Viertelkreise, eingenommen, so entstehen in der Fläche Eckbereiche. Es kann dann sachdienlich sein, diese Eckbereiche mit zusätzlichen kleinen Lüftern zu belüften und in diesen Bereichen eigene Querschnittsgeometrien für die Körpermodule vorzusehen, um auch in diesen Eckbereichen eine restlose Belüftung zu gewährleisten.

Ausführungsbeispiele, aus denen sich weitere erfinderische Merkmale ergeben, sind in der Zeichnung schematisch dargestellt. Es zeigen:
- Fig. 1: eine Draufsicht auf einen Aufwuchskörper für eine halbkreisförmige Klärkammer,
- Fig. 2: eine Schnittansicht des Aufwuchskörpers gemäß Fig. 1,
- Fig. 3: eine Schnittansicht eines einzelnen Körpermoduls eines Aufwuchskörpers gemäß Fig. 1,
- Fig. 4: eine Ausschnittvergrößerung der Darstellung gemäß Fig. 3,
- Fig. 5: die Draufsicht auf das Körpermodul gemäß Fig. 3,
- Fig. 6: eine Ausschnittvergrößerung eines Details aus der Darstellung gemäß Fig. 5,
- Fig. 7: einen erfindungsgemäßen Einsatz in einer Schnittansicht mit einem Aufwuchskörper,
- Fig. 8: eine zweite Schnittansicht des Einsatzes gemäß Fig. 7,
- Fig. 9: einen Einsatz gemäß Fig. 7 in der Schnittansicht in einem Funktionsschaubild,
- Fig. 10: eine zweite Schnittansicht des Einsatzes gemäß Fig. 8 zum Funktionsschaubild gemäß Fig. 9 und
- Fig. 11: eine Draufsicht auf den Einsatz gemäß Fig. 9 und 10 mit den Schnittlinien IX,IX und X,X zu den in Fig. 9 und 10 gezeigten Schnittansichten.

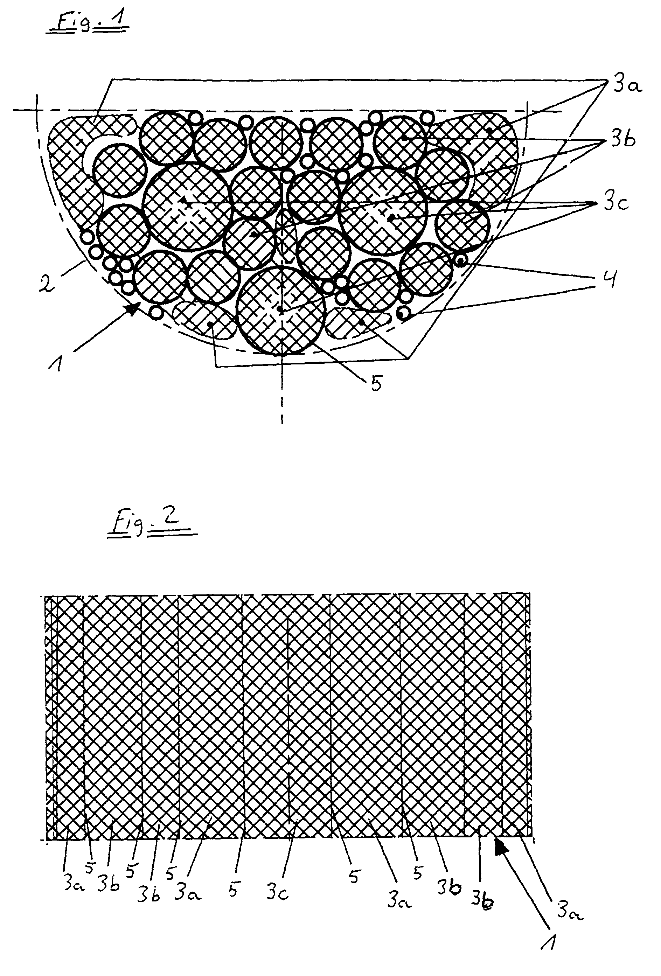

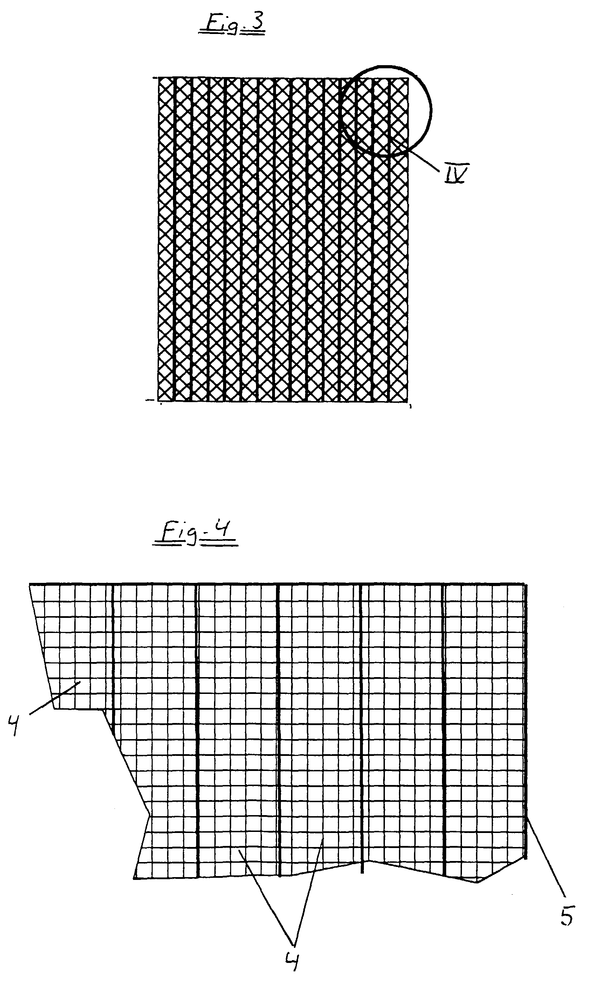

Figur 1 zeigt eine Draufsicht auf einen Aufwuchskörper 1, der in eine, in der Figur 1 nur angedeutete, halbkreisförmige Klärkammer 2 eingesetzt ist.

Der Aufwuchskörper 1 umfaßt Körpermodule, die nur zweiseitig durch die Stirnseiten von oben nach unten oder von unten nach oben in lotrechter Strömungsrichtung durchströmbar sind, und zwar mit unterschiedlichen Querschnittsformen und Querschnittsflächengrößen. Je nach Größe, Form und Funktion können in der Figur 1 verschiedene Körpermodule voneinander unterschieden werden.

Es gibt Körpermodule 3a, die eine Querschnittsform aufweisen, die der Form der Klärkammer 2 angepaßt ist und insbesondere Randbereiche des Aufwuchskörpers 1 bilden, in der Figur 1 sind die Körpermodule 3a dafür vorgesehen, sauerstoffangereicher-tes absinkendes Schmutzwasser zu führen.

Sodann können der Figur 1 Körpermodule 3b entnommen werden. Hierbei handelt es sich um eine Standardform und -größe von Körpermodulen mit kreisförmiger Querschnittsfläche, die ebenfalls für absinkendes sauerstoffangereichertes Schmutzwasser vorgesehen sind.

Außerdem gibt es in der Figur 1 eine zweite Art von Standard-Körpermodulen 3c, die sich von den Körpermodulen 3b in erster Linie dadurch unterscheiden, daß sie eine deutlich größere Querschnittsfläche haben, die ebenfalls kreisförmig ausgebildet ist. Diese Körpermodule 3c sind für aufsteigendes Schmutzwasser gedacht, das mit Luft von im Bodenbereich der Klärkammer 2 befindlichen Lüftern angereichert wird und dadurch letztendlich einen Auftrieb erhält.

Es ist in der Figur 1 erkennbar, daß jeweils um zentrale Körpermodule 3c Ringe von kleineren Körpermodulen 3b gruppiert sind, wobei sich die Ringe der Körpermodule 3b in der Weise überlappen, daß einige der Körpermodule 3b gleichzeitig zu den umgebenden Ringen einander benachbarter zentraler Körpermodule 3c gehören. In der Draufsicht der Figur 1 bilden die zentralen Körpermodule 3c mit den sie umgebenden Körpermodulen 3b jeweils stilisierte 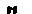 Blütenformen" mit dem zentralen Körpermodul 3c als 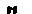 Blütenmitte^{"} und den Körpermodulen 3b als 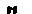 Blütenblättern". Unterhalb der Körpermodule 3c sind jeweils konzentrisch vorzugsweise Tellerlüfter angeordnet, die Luft durch die Körper-module 3c hochblasen.

Auch in den Eckbereichen der Klärkammer 2 könnten zusätzliche kleinere Lüfter vorgesehen sein, so daß auch die Körpermodule 3a zum Teil dazu vorgesehen sein könnten, aufsteigendes Schmutzwasser zu führen.

Insgesamt sollen die Querschnittsflächen für das absteigende Schmutzwasser und die Querschnittsflächen für das aufsteigende Schmutzwasser etwa gleich große Gesamt-flächen bilden, um einen ausgewogenen Zwangsumlauf zu ermöglichen.

In der Figur 1 sind einzelne Röhren 4 aus Trägermaterial angedeutet. Diese Röhren 4 dienen zur Ausfüllung von Hohlräumen zwischen den Packungen von Körpermodulen 3a bis 3c, um Flächenverluste zu vermeiden.

Die Körpermodule 3a bis 3c, die der Einfachheit halber nur kariert gezeichnet sind, bestehen jeweils aus einem Bündel derartiger Röhren 4, wobei dieses Bündel jeweils zur Ausbildung eines nur noch zweiseitig durchströmbaren Körpermoduls mit einer Folie 5 ummantelt ist.

Die Röhren 4 aus Trägermaterial selbst sind nicht ummantelt, sondern als allseitig durchströmbare Gitternetzröhren ausgebildet. Durch die Einschiebung dieser einzelnen Röhren 4 in Zwischenräume zwischen den Körpermodulen 3a bis 3c werden aber mittelbar auch diese Röhren 4 von den Mäntel 5 bzw. der Wandung der Klärkammer 2 seitwärts begrenzt und auf diese Weise ebenfalls bemantelt.

In der Figur 1 sind zwar weiterhin Lücken zwischen den Trägermaterialien erkennbar.

Dies geschieht aber nur wegen der zeichnerischen Übersichtlichkeit. In der Praxis sollte der Aufwuchskörper eine zum Querschnitt der Klärkammer passende Fläche abdecken, die möglichst lückenlos mit Trägermaterial für Bakterienmaterialien ausgefüllt ist. Da das für die Folien 5 und die Röhren 4 verwendete Material, zum Beispiel Polyäthylen, flexibel ist, kann das Trägermaterial federnd aneinander gedrückt werden, um eine Lückenlosigkeit zu erzielen.

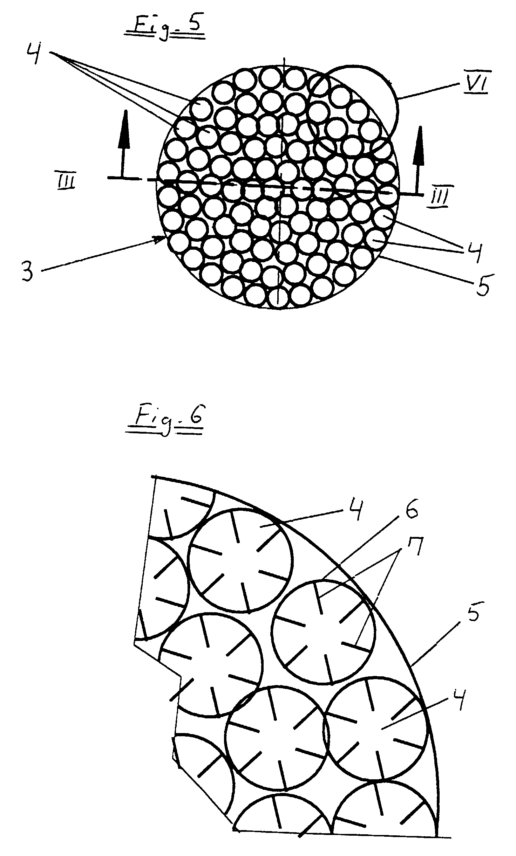

Figur 2 zeigt den in Figur 1 dargestellten Aufwuchskörper 1 in einer Seitenansicht. Nur schematisch sind einzelne, einander zum Teil überlappende Körpermodule 3a bis 3c zu erkennen, die jeweils von Folien 5 begrenzt werden bzw. ummantelt sind.

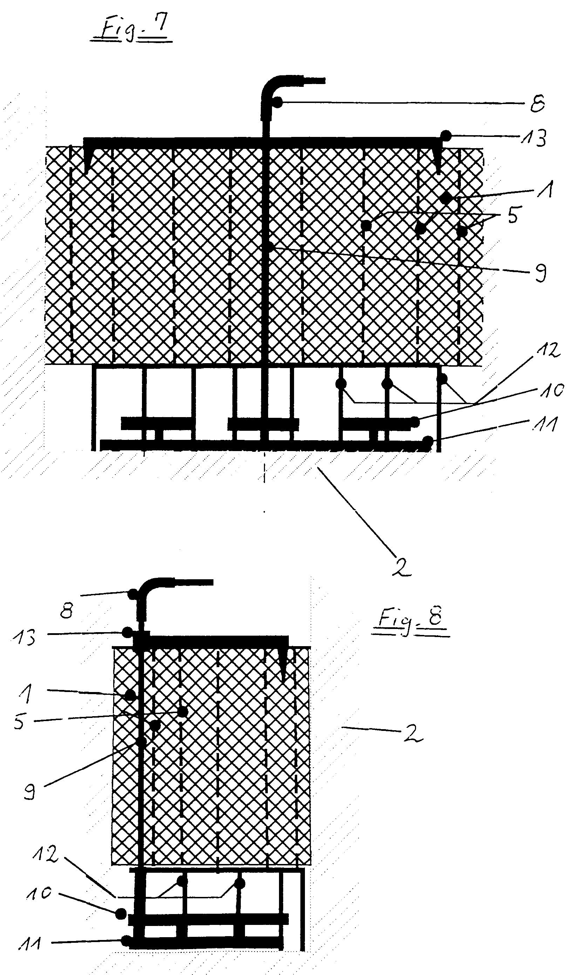

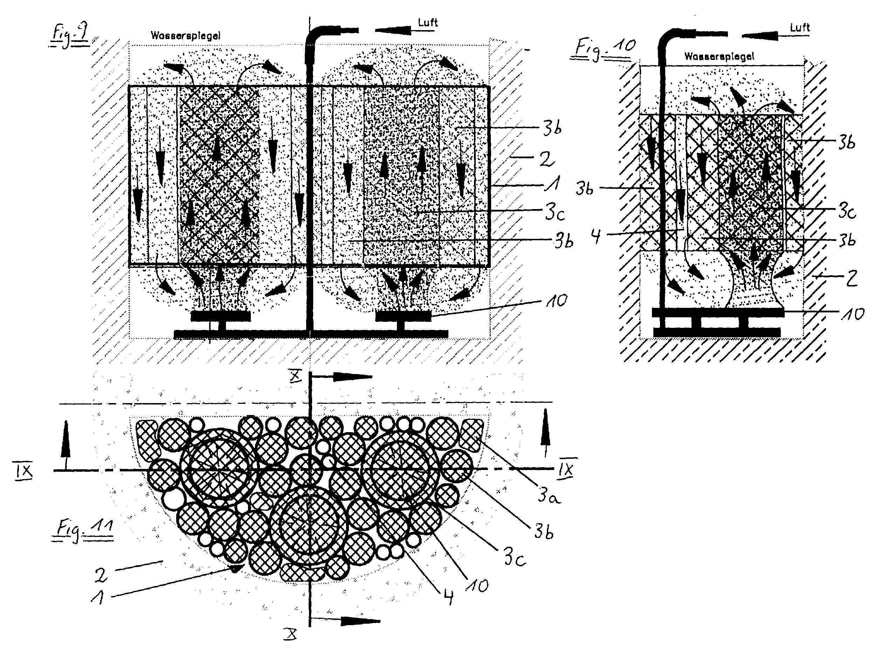

Figur 3 zeigt einen Längsschnitt bzw. einen Ausschnitt eines Körpermoduls 3, der der Übersichtlichkeit halber nicht weiter mit Bezugszahlen versehen ist, sondern nur kariert angedeutet ist. In der Figur 3 ist ein Detail IV umrahmt, welches in einer Ausschnittvergrößerung in der Figur 4 gezeigt ist.

Aus der Figur 4 ist erkennbar, daß ein Körpermodul, sei es ein Körpermodul 3a, 3b oder 3c, aus gebündelten Röhren 4 aus Trägermaterial besteht, wobei das Bündel der Röhren 4 mit einer Folie 5 ummantelt ist. Gerade Körpermodule 3a, 3b für absteigendes Schmutzwasser können auch unummantelt bleiben.

In der Figur 4 ist angedeutet, daß die einzelne Röhre 4 aus einem Gitterwerk eines netzartigen Trägermaterials besteht und für sich genommen somit allseitig durchströmbar ist. Nur durch die äußere Folie 5 ist das Bündel, nämlich das Körpermodul selbst, nur noch zweiseitig durchströmbar.

Jede einzelne verstrebung bzw. jeder einzelne Faden des Gitternetzwerkes der einzelnen Röhren 4 kann zur Ansiedlung von Bakterienmaterial dienen.

Den Figuren 3 und 4 ist insbesondere entnehmbar, daß die Röhrenlängsachsen der Röhren 4 parallel zur Gesamtlängsachse eines Körpermoduls bzw. zur Längsachse der aus dem Folienmantel 5 gebildeten Röhre ausgerichtet sind.

Die Fig. 5 zeigt eine Draufsicht auf ein Körpermodul 3 gemäß der Fig. 3. In der Fig. 5 ist die Schnittlinie III,III angedeutet, entlang der der in Fig. 3 gezeigte Längsschnitt läuft.

In der Draufsicht gemäß Fig. 5 sind die miteinander gebündelten Röhren 4 zu erkennen. Da es sich um ein kreisförmiges Standard-Körpermodul handelt, könnte es sich um ein Körpermodul 3b oder 3c handeln.

Weiter ist aus der Fig. 5 zu erkennen, daß das gesamte Bündel aus Röhren 4 mit einer umlaufenden Folie 5 zu einem Körpermodul 3 zusammengefaßt ist.

In der Fig. 5 ist mit VI ein Ausschnitt aus dem Körpermodul bezeichnet, der aus der Fig. 6 in Vergrößerung zu entnehmen ist

In der Fig. 6 ist die umlaufende Folie 5 zu erkennen, sowie die das Innere des Körpermodules bildenden Röhren 4. An einer einzelnen Röhre 4 ist in der Fig. 6 gekennzeichnet, daß die Röhre 4 nicht nur aus dem aus Gitterwerk bestehenden Röhrenmantel 6 besteht, sondern auch radial einwärts gerichtete Flächen bzw. Stege 7 aufweist, an denen sich ebenfalls Bakterienmaterial ansiedeln kann. Jede einzelne Röhre 4 bietet dem Bakterienmaterial also bezogen auf das eingenommene Volumen eine relativ große Arbeitsoberfläche.

Fig. 7 zeigt einen erfindungsgemäßen Einsatz in einer mit Betonwänden angedeuteten Klärkammer 2 in einem Längsschnitt in vollständigerer Ausstattung.

Der Einsatz umfaßt einen Aufwuchskörper 1, der mittels Folien 5 in einzelne Körpermodule unterteilt ist. Der Aufwuchskörper 1 ist an einem lotrecht aufragenden Befestigungsrohr 9 eines Statives befestigt, welches einen oberen Luftzuführungsanschluß 8 aufweist und selbst luftleitend ausgebildet ist.

Das Befestigungsrohr 9 ist mit Tellerlüftern 10 luftleitend verbunden, die im bodennahen Bereich der Klärkammer 2 angeordnet sind.

Das Befestigungsrohr 9 ragt von einem Stativfuß bzw. einem Grundgestell 11 auf, welches auf dem Boden der Klärkammer 2 aufgestellt ist. Von diesem Boden bzw. dem Stativfuß 11 sind über Stativbeine die Körpermodule des Aufwuchskörpers bzw. der Aufwuchskörper 1 insgesamt abgestützt.

Zur Halterung und Klammerung des Aufwuchskörpers 1 ist außerdem auf der Oberseite des Aufwuchskörpers 1 ein Tauchkörperhalter 13 vorgesehen.

Der Aufwuchskörper 1 ist insgesamt wiederum nur schematisch kariert angedeutet.

Fig. 8 zeigt einen zur Darstellung der Fig. 7 quer verlaufenden Vertikalschnitt durch den erfindungsgemäßen Einsatz gemäß Fig. 7. Gleiche Bauelemente sind mit den gleichen Bezugszahlen bezeichnet wie in Fig. 7.

Wie bereits in Fig. 1 angedeutet, ist bei den gezeigten Ausführungsbeispielen eine Klärkammer 2 ausgewählt worden, die nur eine Halbkreisfläche umfaßt, also beispielsweise von einer an sich runden Kammer abgetrennt ist. Entsprechend ist die Abmessung des Aufwuchskörpers 1 in der Darstellung der Fig. 8 schmaler als in der Fig. 7, weil sich die Klärkammer 2 in der Fig. 7 über einen Durchmesser der gesamten runden Kammer erstreckt, während sich die Klärkammer 2 in der Darstellung der Fig. 8 nur über einen Radius der Gesamtkammer erstreckt. Entsprechend unsymmetrisch ist die Ausbildung des Einsatzes in Fig. 8 bezüglich des Befestigungsrohres 9.

Die Fig. 9 bis 11 zeigen noch einmal in drei Ansichten, nämlich in zwei Vertikalschnitten und in einer Draufsicht in Funktionsschaubildern einen erfindungsgemäßen Einsatz gemäß den Fig. 1, 7 und 8, wobei die Fig. 9 der Darstellung gemäß Fig. 7 entspricht, die Fig. 10 der Darstellung gemäß Fig. 8 entspricht und die Fig. 11 der Darstellung der Fig. 1 entspricht, in der Fig. 11 ist außerdem mit Schnittlinien IX, IX und X,X dargestellt, wie die Schnitte gemäß den Fig. 9 bzw. 10 durch die Darstellung der Fig. 11 verlaufen.

In den Fig. 9 bis 11 wurden nur ausgewählte Bezugszahlen der Übersichtlichkeit halber verwendet, die den in den vorhergehenden Figuren verwendeten Bezugszahlen entsprechen.

Zunächst einmal ist in Fig. 9 zu erkennen, daß der Einsatz in die Klärkammer 2 soweit abgesenkt wird, daß der Aufwuchskörper 1 ein Tauchkörper ist, der sich unterhalb eines Wasserspiegels befindet.

Im bodennahen Bereich der Klärkammer 2 sind zwei Tellerlüfter 10 zu erkennen, die nach oben sprudelnde Luft abgeben. Jeweils über einem Tellerlüfter 10 befindet sich ein zentrales Körpermodul 3c für mit Luft angereichertes, aufsteigendes Schmutzwasser. Dieses Schmutzwasser strömt im Rahmen eines Zwangsumlaufes durch Körpermodule 3b wieder abwärts, die um das zentrale Körpermodul 3c herum angeordnet sind. Die Zwangsumläufe des Wassers sind mit Pfeilen angedeutet Die von den Tellerlüftern 10 abgegebene Luft wird oben durch das Befestigungsrohr des Statives zugeführt. In der Fig. 10 ist zu erkennen, daß zum Teil auch einzelne Röhren 4 zur Leitung des absteigenden Wassers als Lückenfüller im Aufwuchskörper Verwendung finden.

Insbesondere aus der Fig. 10, aber auch aus der Fig. 9 ist erkennbar, daß die aus dem Teilerlüfter 10 aufsteigende Luft sich als Luftstrom zunächst verengt und dann in einem höheren Abstand zum Tellerlüfter 10 wiederum verbreitert. Der Abstand des Körpermoduls 3c vom Tellerlüfter 10 und auch die Querschnittsfläche des Körpermoduls 3c ist so bemessen, daß der sich gerade wieder verbreiternde Luftschwall über den gesamten Querschnitt in das Körpermodul 3c eintritt.

Die Fig. 11 entspricht, wie gesagt, im wesentlichen der Darstellung der Fig. 1. In der Fig. 11 ist jedoch angedeutet, daß sich konzentrisch unter zentralen Körpermodulen 3c jeweils ein Tellerlüfter 10 befindet.

## Patentansprüche

1. Einsatz für eine Klärkammer einer Kläranlage, vorzugsweise einer Klein- oder Hauskläranlage,
umfassend einen Aufwuchskörper für den Aufwuchs eines Bakterienmaterials zum aeroben Abbau von Schmutzstoffen, der als Tauchkörper zum Eintauchen unterhalb eines Wasserspiegels in die Klärkammer vorgesehen ist und Trägermaterial zur Ansiedlung des Bakterienmaterials umfaßt, wobei das Trägermaterial selbst eine relativ offene, im wesentlichen allseitig durchströmbare Struktur aufweist, und umfassend eine Belüftungseinrichtung mit wenigstens einem unter dem Trauchkörper anordbaren Lüfter, vorzugsweise Tellerlüfter,
**dadurch gekennzeichnet**,
daß der Aufwuchskörper (1) Körperbereiche oder Körpermodule (3a,3b,3c) aufweist, die jeweils Trägermaterial (4) enthalten, das für eine nur zweiseitige Durchströmung mit weitgehend lotrechter Strömungsrichtung zu einer röhrenartigen Form beliebigen Querschnitts ummantelt ist.

2. Einsatz nach Anspruch 1, dadurch gekennzeichnet, daß der Aufwuchskörper (1), aus einem Bündel von ummantelten Körperbereichen oder Körpermodulen (3) besteht und daß dieses Bündel insgesamt nur zweiseitig durchströmbar ist.

3. Einsatz nach Anspruch 1 oder 2, dadurch gekennzeichnet, daß die Ummantelung des Trägermaterials (4) eines Körpermoduls (3) aus einer flüssigkeitsundurchlässigen Folie (5) besteht.

4. Einsatz nach einem der Ansprüche 1 bis 3, dadurch gekennzeichnet, daß in Raumlücken der zum Aufwuchskörper (1) gebündelten Körpermodule (3) unummanteltes Trägermaterial (4) als Füllung eingebracht ist welches durch die Ummantelungen (5) der benachbarten Körpermodule (3) und/oder die Wände der Klärkammer mittelbar seitwärts bemantelt ist.

5. Einsatz nach einem oder mehreren der vorhergehenden Ansprüche, dadurch gekennzeichnet, daß der Aufwuchskörper (1) an einem lotrechten Befestigungsrohr (9) eines Stativträgers angeordnet ist das von einem Grundgestell (11) des Stativträgers aufragt, an dem der wenigstens eine Lüfter (10) der Belüftungseinrichtung angeordnet ist, der durch das luftleitende Befestigungsrohr (9) mit Luft versorgt wird.

6. Einsatz nach einem oder mehreren der vorhergehenden Ansprüche, dadurch gekennzeichnet, daß oberhalb des bzw. eines Lüfters (10) ein Körpermodul (3c) relativ größeren Querschnittes für die aufsteigende Strömung vorgesehen ist.

7. Einsatz nach Anspruch 6, dadurch gekennzeichnet, daß um das zentrale Körpermodul (3c) oberhalb des Lüfters (10) Körpermodule (3b) kleineren Querschnittes für die absteigende Strömung gruppiert sind.

8. Einsatz nach Anspruch 6 oder 7, dadurch gekennzeichnet, daß die Querschnitte für die aufsteigende Strömung und die Querschnitte für die absteigende Strömung etwa gleiche Gesamtflächen zur Erzeugung und Aufrechterhaltung eines Zwangsumlaufes bilden.

9. Einsatz nach einem oder mehreren der vorhergehenden Ansprüche, dadurch gekennzeichnet, daß der Einsatz zur Befüllung einer halbkreisförmigen Teilkammer (2) ausgebildet ist, wobei drei Lüfter (10) auf einem Halbkreisbogen angeordnet sind.

10. Einsatz nach Anspruch 9, dadurch gekennzeichent, daß für Eckbereiche der Halbkreisform kleinere Lüfter vorgesehen sind.
